(19) Europäisches Patentamt
European Patent Office
Office européen des brevets

(11) EP 4 385 326 A1

# (12) EUROPEAN PATENT APPLICATION

(43) Date of publication:
**19.06.2024 Bulletin 2024/25**

(21) Application number: **22383225.4**

(22) Date of filing: **15.12.2022**

(51) International Patent Classification (IPC):
***A01N 31/04*** *(2006.01)* ***A01N 65/10*** *(2009.01)*
***A01N 65/34*** *(2009.01)* ***A01N 65/00*** *(2009.01)*
***A01P 7/04*** *(2006.01)*

(52) Cooperative Patent Classification (CPC):
**A01N 31/04; A01N 31/02; A01N 37/06; A01N 65/00; A01N 65/34**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Kimitec Biogorup**
**04738 Vicar (ES)**

(72) Inventors:
- **Santana Méridas, Omar**
  **04738 Vicar (ES)**
- **Martín Bejerano, María**
  **04738 Vicar (ES)**
- **García Moreno, Juan Jose**
  **04738 Vicar (ES)**
- **Julio Torres, Luis Fernando**
  **04738 Vicar (ES)**
- **Valverde Sancho, Juan**
  **04738 Vicar (ES)**

## (54) BIOPESTICIDE COMPOSITION AND METHOD FOR CONTROLLING AND TREATING BROAD SPECTRUM OF PESTS AND DISEASES IN PLANTS

(57) Biopesticide composition and method for controlling and treating broad spectrum of pests and diseases in plants. Biopesticide composition obtained by plant extract and resulting benzyl alcohol of extraction process. Method for controlling and treating broad spectrum of pests, as arthropods in all its life cycle, and diseases caused by fungi in plants.

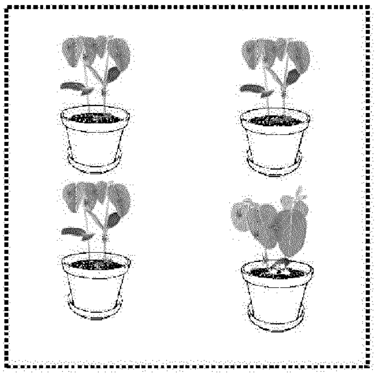

Figure 6

EP 4 385 326 A1

## Description

### Technical Field

The present invention relates to a biopesticide composition comprising firstly plant extract and resulting benzyl alcohol of extraction process, and secondly at least one compound of the formula (I) or pure compound or essential oil. In a further aspect, the present invention relates to a method for controlling pests and treating diseases in plants. The present invention relates to pesticides that are derived from natural substances.

### Background Art

Pests (insects, arachnids, mites, larvae thereof, nematodes, etc.) and diseases (fungi, bacteria, virus, etc) represent a huge problem in the agriculture field. They have annually cost humans in crop losses and in the expense of keeping them under control. For example, the losses caused by pests in agricultural environments include decreased crop yield, reduced crop quality, and increased harvesting costs.

Over the years, pesticides based on chemical principles have provided an effective means of pest control. Despite being efficient treatment, this kind of the commercial products involves the use of toxic chemical substances such as those disclosed in US 4,376,784; US 4,308,279; US 4,985,251; US 4,983,390; US 4,818,534; US 4,983,389; US 2,423,284, US 4,948,013, EP 462,347 and DE 4,421,471.

One wide alternative to resolve this problem is to use biopesticide composition as a phytosanitary treatment. According to US Environmental Protection Agency are certain types of pesticides derived from such natural materials as animals, plants, bacteria, and certain minerals. In the state of art can be found different biopesticide compositions such as WO 99/18802 accordingly, it provides a pesticidal composition which is relatively non-toxic to mammals, particularly humans, or plants. A pesticidal composition comprising by *Eucalyptus* oil, cajeput oil, lemongrass oils and of a surfactant for controlling pesticidal activity of limited use against some pests. US 4,759,930 discloses insect-killing compositions comprise pyrethrum, rotenone, or both, and one or more of the following: *Eucalyptus,* rosemary, peppermint and boric acid kill insects such as adult and immature cockroaches in large numbers, yet are, where no boric acid is present, relatively innocuous to most human beings and animals. US 8,623,420 this invention is directed to a sweet whey-based biopesticide composition for a limited use of pests.

Among the biopesticide composition based on bioactive ingredients, around 80% of known are isolated from plants and some specialized molecules are unique from the plant kingdom. Extraction is the crucial first step to separate the desired natural products (molecules, secondary metabolites) from the plant biomass (Adaramola and Onigbinde, 2017; Zhang *et al.,* 2018). The main objective of extraction process is to maximize the amount of target compounds and to obtain the highest biological activity of these extracts. The extraction yield and biological activity of the extracts strongly depends on the extraction method and solvent (Truong *et al.,* 2019).

There are plenty of extraction methods describe for the obtention of bioactive extract from vegetable matrixes. They can be classified as conventional methods (maceration, infusion, percolation, decoction, reflux extraction, soxhlet extraction, solvent- solvent extraction, hydro-distillation, steam distillation) and advanced methods (ultrasound assisted extraction, enzyme-assisted extraction, microwave-assisted extraction, pulsed electric field assisted extraction, supercritical fluid extraction, pressurized liquid extraction and colloid mill-based systems) (Adaramola and Onigbinde, 2017; Zhang *et al*., 2018). Solvent extraction, mainly plant extracts, and distillation, specific for a wide range of essential oils, are the most used in natural products.

(Pandey and Tripathi 2014) described desirable solvent properties to be used in extraction procedures. Most common solvents used for active component extraction are water, ethanol and/or water: ethanol mixtures (hydroalcoholic mixtures), methanol, chloroform, ether, and acetone. These are also used depending on the raw materials and compounds that want to be obtained.

### Summary of invention

The present invention solves the following problems: use of toxic chemical pesticide and the reduction of Maximum Residue Levels (MRL) by means of number of active ingredients detectable.

The present invention is a biopesticide composition for controlling and treating broad spectrum of pests and diseases in plants comprising a plant extract and resulting benzyl alcohol obtained by extraction process.

Benzyl alcohol is an aromatic alcohol with the formula $C_6H_5CH_2OH$. The benzyl group is often abbreviated "Bn", thus benzyl alcohol is denoted as BnOH. Benzyl alcohol is a colourless liquid with a mild pleasant aromatic odour, low toxicity, and low vapor pressure. Benzyl alcohol has moderate solubility in water (4 g/100 mL) and is miscible in alcohols and diethyl ether. In addition, BnOH is characterised by high-boiling point that allow to be used in high-temperature extraction process. As a consequence, the performance of BnOH used extraction is better that no thermolabile

substance.

One aspect of the present invention is a biopesticide composition based on a plant extract and resulting benzyl alcohol of step b) obtained by the following steps:

a. Drying and milling of vegetable matrix
b. Solid-liquid extraction technique from vegetable matrix using benzyl alcohol as extraction solvent.
c. Separation of solid material can be carried out with any process of centrifugation or filtration available in the state of art.

Vegetable matrix mentioned in the first step can be selected from different species and no limited to *Allium sativum, Aesculus hippocastanum, Arctium lappa, Camellia sinensis, Carum carvi, Centella asiatica, Cinnamomum camphora, Cinnamomum cassia, Cinnamomum verum, Citrus sp., Cymbopogon sp., Cynara scolymus, Equinacea purpura, Eucalyptus sp., Foeniculum vulgare, Illicium verum, Juglans regia, Juniperus communis, Lavandula x intermedia, Linum usitatissimum, Melilotus officinalis, Mentha sp., Olea europaea, Origanum vulgare, Persea americana, Petroselinum crispum, Peumus boldus, Pinus sp., Prunus armeniaca, Prunus avium, Prunus cerasus, Prunus dulcis, Salix sp., Salvia officinalis, Satureja montana, Tanacetum vulgare, Thymus vulgaris, Trigonella foenum-graecum, Urtica dioica and Zingiber officinale.*

Vegetable material can be employed as powder, essential oil or hydroalcoholic extract.

The type of extraction technique can be selected in the group comprising maceration, percolation, soxhlet, pressurized liquid extraction, microwave-assisted extraction, ultrasound-assisted extraction, and accelerated solvent extraction. The employed technique is preferably maceration coupled with recirculation condition, using a multifunction dispersing machine working on the rotor-stator principle.

In the present invention, the insecticidal activity in plant extracts is increased by polarity BnOH that allow to extract a wide range of bioactive metabolites, and affinity of BnOH for them. Resulting a surprisingly composition with double performance; carrier and increasing biocide capacity. Resulting benzyl alcohol used as a solvent in the extraction process acts as a powerful efficiency carrier, not only transporting plant extracts but also the biopesticide composition, allowing to increase the diffusion rate of bioactive molecule across the arthropod's cuticle.

Another embodiment of the present invention, the biopesticide composition further comprising one or more compound of formula:

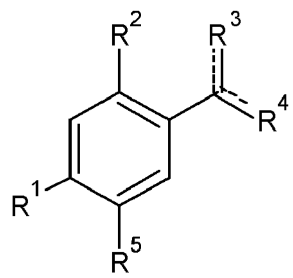

(I)

**TABLE 1 Compound of biopesticide composition**

| $R_1$ | $R_2$ | $R_3$ | $R_4$ | $R_5$ |
|---|---|---|---|---|
| -H | -H | -H | -OH | -H |
| -H | -H | -H | $-O-CO-CH-(CH_3)_2$ | -H |
| -H | -H | -H | $-O-CO-CH(CH_3)-CH_2-CH_3$ | -H |
| -H | -H | -H | $-O-CO-CH_3$ | -H |
| -H | -H | -H | $-O-CO-CH_2-CH_3$ | -H |
| -H | -H | -H | $-O-CO-(CH_2)_2-CH_3$ | -H |
| -H | -H | -H | $-O-CO-(CH_2)_3-CH_3$ | -H |

(continued)

| $R_1$ | $R_2$ | $R_3$ | $R_4$ | $R_5$ |
|---|---|---|---|---|
| -H | -H | -H | $-O-CO-(CH_2)_4-CH_3$ | -H |
| -H | -H | -H | $-O-CO-(CH_2)_5-CH_3$ | -H |
| -H | -H | -H | $-O-CO-(CH_2)_6-CH_3$ | -H |
| -H | -H | -H | $-O-CO-(CH_2)_7-CH_3$ | -H |
| -H | -H | -H | $-O-CO-(CH_2)_8-CH_3$ | -H |
| -H | -H | -H | $-O-CO-(CH_2)_9-CH_3$ | -H |
| -H | -H | -H | $-O-CO-(CH_2)_{10}-CH_3$ | -H |
| -H | -H | -H | $-O-CO-(CH_2)_{11}-CH_3$ | -H |
| -H | -H | -H | $-O-CO-(CH_2)_{12}-CH_3$ | -H |
| -H | -H | -H | $-O-CO-(CH_2)_{13}-CH_3$ | -H |
| -H | -H | -H | $-O-CO-(CH_2)_{14}-CH_3$ | -H |
| -H | -H | -H | $-O-CO-(CH_2)_{15}-CH_3$ | -H |
| -H | -H | -H | $-O-CO-(CH_2)_{16}-CH_3$ | -H |
| -H | -H | -H | $-O-CO-(CH_2)_{17}-CH_3$ | -H |
| -H | -H | -H | $-O-CO-(CH_2)_{18}-CH_3$ | -H |
| -H | -H | -H | $-O-CO-(CH_2)_7-CH=CH-(CH_2)_7-CH_3$ | -H |
| -H | -H | -H | $-O-CO-(CH_2)_7-CH=CH-CH_2-CH=CH-(CH_2)_4-CH_3$ | -H |
| -H | -H | -H | $-O-CO-(CH_2)_7-CH=CH-CH_2-CH=CH-CH_2-CH=CH-CH_2-CH_3$ | -H |
| -H | -H | -H | =O | -H |
| -H | -H | -H | $=CH_2-CO-CH_3$ | -H |
| -H | -H | -H | =CH-CO-CH=CH-Phenyl | -H |
| -H | -H | =O | $-CH_3$ | -H |
| -H | -H | =O | -CH=CH-Phenyl | -H |
| -H | -H | =O | -OH | -H |
| -H | -H | =O | -OH | -OH |
| -H | -H | =O | $-O-CH_3$ | -H |
| -H | -H | =O | $-O-CH_2-CH_3$ | -H |
| -H | -H | =O | $-O-CH_2$-Phenyl | -H |
| -H | -H | =O | $-O-CH_2$-CH=CH-Phenyl | -H |

(continued)

| $R_1$ | $R_2$ | $R_3$ | $R_4$ | $R_5$ |
|---|---|---|---|---|
| -H | -H | =O | 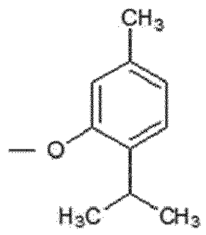 | -H |
| -H | -H | =O | 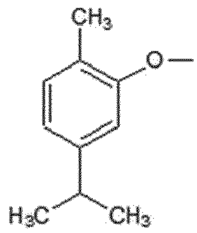 | -H |
| -H | -H | =O | 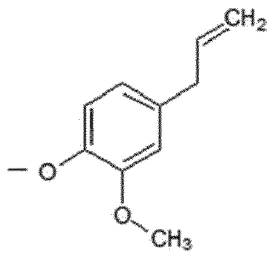 | -H |
| -H | -H | =O | 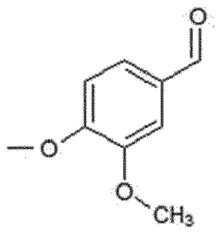 | -H |
| -H | -H | =O | 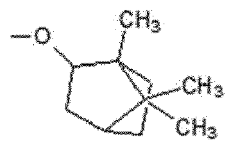 | -H |
| -H | -H | =O | 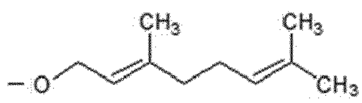 | -H |
| -H | -H | -H | $-NH_2$ | -H |
| -H | -H | -H | -NH-Glycine | -H |
| -H | -H | -H | $-NH-CH_2$-Phenyl | -H |
| -H | -H | -H | $-N-(-CH_2$-Phenyl$)_2$ | -H |
| -H | -H | =O | $-NH_2$ | -H |
| -H | -H | =O | $-NH-CH_2$-Phenyl | -H |
| -H | -H | =O | $-NH-CH=CH-CH_2$-Phenyl | -H |

(continued)

| $R_1$ | $R_2$ | $R_3$ | $R_4$ | $R_5$ |
|---|---|---|---|---|
| -H | -H | =O | $-NH-CH_2-COOH$ | -H |
| -H | -H | =O | -O-CO-Phenyl | -H |
| -H | -H | -H | $=CH-CH_2OH$ | -H |
| -H | -H | -H | =CH-CHO | -H |
| -H | -H | -H | $=CH-CH=CH-CO-CH_3$ | -H |
| -H | -H | -H | =CH-CH=CH-CO-CH=CH-CH=CH-Ph | -H |
| -H | -H | -H | $=C(CH_3)-COOH$ | -H |
| -H | -H | -H | =CH-COOH | -H |
| -H | -H | -H | $=CH-CO-O-CH_3$ | -H |
| -H | -H | -H | $=CH-CO-O-CH_2-CH_3$ | -H |
| -H | -H | -H | $=CH-CO-O-CH_2$-Phenyl | -H |
| -H | -H | -H | $-O-CH_2-CH=CH$-Phenyl | -H |
| -H | -H | -H | 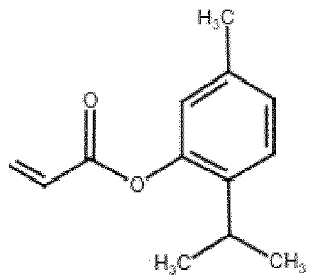 | -H |
| -H | -H | -H | 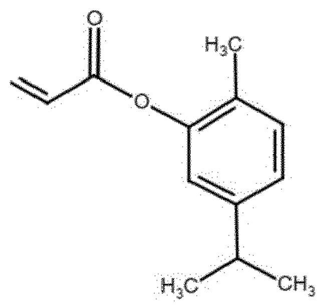 | -H |
| -H | -H | -H | 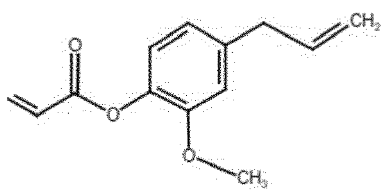 | -H |
| -H | -H | -H | 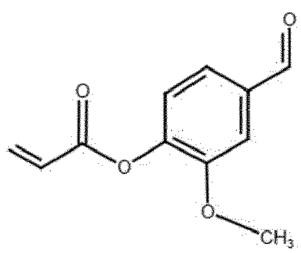 | -H |

(continued)

| $R_1$ | $R_2$ | $R_3$ | $R_4$ | $R_5$ |
|---|---|---|---|---|
| -H | -H | -H | 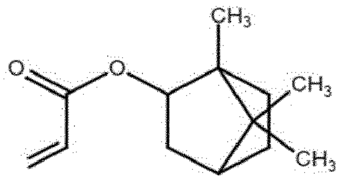 | -H |
| -H | -H | -H | 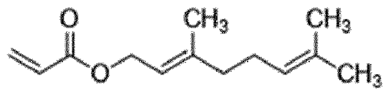 | -H |
| -H | -H | -H | $=CH-CO-NH_2$ | -H |
| -H | -H | -H | $=CH-CO-NH-CH_2$-Phenyl | -H |
| -H | -H | -H | $=CH-CO-NH-CH=CH-CH_2$-Phenyl | -H |
| -H | -H | -H | =CH-CO-NH-Glycine | -H |
| -H | -H | -H | $=CH-CO-NH-CH_2-COOH$ | -H |
| -H | -H | -H | =CH-CO-O-CO-CH=CH-Phenyl | -H |
| $-CH_3$ | -OH | $-CH_3$ | $-CH_3$ | -H |
| $-CH_3$ | -H | $-CH_3$ | $-CH_3$ | -OH |
| $-CH_3$ | $-O-CO-CH_3$ | $-CH_3$ | $-CH_3$ | -H |
| -CH3 | -H | -CH3 | -CH3 | -O-CO-CH3 |
| -CH3 | -O-CH2-COOH | -CH3 | -CH3 | -H |
| -CH3 | -H | -CH3 | -CH3 | -O-CH2-COOH |
| -CH3 | =O | -CH3 | -CH3 | =O |
| -OH | -H | =O | -OH | -H |
| -OH | -H | -H | -OH | -O-CH3 |
| -OH | -H | -H | =O | -O-CH3 |
| -OH | -H | =O | -OH | $-O-CH_3$ |
| $-O-CH_3$ | -H | -H | =O | $-O-CH_3$ |
| $-O-CH_2-CH_3$ | -H | -H | =O | $-O-CH_3$ |
| -O-$CH_2$-Phenyl | -H | -H | =O | $-O-CH_3$ |
| -OH | -H | -H | $=CH-CO-CH_3$ | $-O-CH_3$ |
| -OH | -H | -H | $-CH=CH_2$ | $-O-CH_3$ |
| $-O-CH_3$ | -H | -H | $-CH=CH_2$ | $-O-CH_3$ |
| $-O-CH_2-CH_3$ | -H | -H | $-CH=CH_2$ | $-O-CH_3$ |
| $-O-CO-CH_3$ | -H | -H | $-CH_2=CH_2$ | $-O-CH_3$ |

(continued)

| $R_1$ | $R_2$ | $R_3$ | $R_4$ | $R_5$ |
|---|---|---|---|---|
| -O-$CH_2$-Phenyl | -H | -H | -CH=$CH_2$ | -O-$CH_3$ |
| -H | -OH | =O | -OH | -H |
| -H | -OH | -H | =O | -H |
| -H | -OH | =O | -O-$CH_3$ | -H |
| -H | -OH | =O | -O-$CH_2$-$CH_3$ | -H |
| -H | -OH | =O | -O-$CH_2$-Phenyl | -H |
| -H | -H | -H | =CH-$CH_2$-O-CO-CH-$(CH_3)_2$ | -H |
| -H | -H | -H | =CH-$CH_2$-O-CO-CH($CH_3$)-$CH_2$-$CH_3$ | -H |
| -H | -H | -H | =CH-$CH_2$-O-CO-$CH_3$ | -H |
| -H | -H | -H | =CH-$CH_2$-O-CO-$CH_2$-$CH_3$ | -H |
| -H | -H | -H | =CH-$CH_2$-O-CO-$(CH_2)_2$-$CH_3$ | -H |
| -H | -H | -H | =CH-$CH_2$-O-CO-$(CH_2)_3$-$CH_3$ | -H |
| -H | -H | -H | =CH-$CH_2$-O-CO-$(CH_2)_4$-$CH_3$ | -H |
| -H | -H | -H | =CH-$CH_2$-O-CO-$(CH_2)_5$-$CH_3$ | -H |
| -H | -H | -H | =CH-$CH_2$-O-CO-$(CH_2)_6$-$CH_3$ | -H |
| -H | -H | -H | =CH-$CH_2$-O-CO-$(CH_2)_7$-$CH_3$ | -H |
| -H | -H | -H | =CH-$CH_2$-O-CO-$(CH_2)_8$-$CH_3$ | -H |
| -H | -H | -H | =CH-$CH_2$-O-CO-$(CH_2)_9$-$CH_3$ | -H |
| -H | -H | -H | =CH-$CH_2$-O-CO-$(CH_2)_{10}$-$CH_3$ | -H |
| -H | -H | -H | =CH-$CH_2$-O-CO-$(CH_2)_{11}$-$CH_3$ | -H |
| -H | -H | -H | =CH-$CH_2$-O-CO-$(CH_2)_{12}$-$CH_3$ | -H |
| -H | -H | -H | =CH-$CH_2$-O-CO-$(CH_2)_{13}$-$CH_3$ | -H |
| -H | -H | -H | =CH-$CH_2$-O-CO-$(CH_2)_{14}$-$CH_3$ | -H |
| -H | -H | -H | =CH-$CH_2$-O-CO-$(CH_2)_{15}$-$CH_3$ | -H |
| -H | -H | -H | =CH-$CH_2$-O-CO-$(CH_2)_{16}$-$CH_3$ | -H |
| -H | -H | -H | =CH-$CH_2$-O-CO-$(CH_2)_{17}$-$CH_3$ | -H |
| -H | -H | -H | =CH-$CH_2$-O-CO-$(CH_2)_{18}$-$CH_3$ | -H |
| -H | -H | -H | =CH-$CH_2$-O-CO-$(CH_2)_7$-CH=CH-$(CH_2)_7$-$CH_3$ | -H |
| -H | -H | -H | =CH-$CH_2$-O-CO-$(CH_2)_7$-CH=CH-$CH_2$-CH=CH-$(CH_2)_4$-$CH_3$ | -H |
| -H | -H | -H | =CH-$CH_2$-O-CO-$(CH_2)_7$-CH=CH-$CH_2$-CH=CH-$CH_2$-CH=CH-$CH_2$-$CH_3$ | -H |
| -OH | -H | -H | =CH-COOH | -OH |
| -OH | -H | -H | =CH-CO-O-CHz-Phenyl | -OH |
| -OH | -H | -H | =CH-CO-Phenyl | -H |

(continued)

| $R_1$ | $R_2$ | $R_3$ | $R_4$ | $R_5$ |
|---|---|---|---|---|
| -H | -OH | -H | =CH-CO-Phenyl | -H |
| -H | -H | -H | =CH-CO-Phenyl | -OH |
| -OH | -H | -H | =CH-COOH | -H |
| -H | -OH | -H | =CH-COOH | -H |
| -H | -H | -H | =CH-COOH | -OH |
| $-O-CO-CH_3$ | -H | -H | =CH-COOH | -H |
| -H | $-O-CO-CH_3$ | -H | =CH-COOH | -H |
| -H | -H | -H | =CH-COOH | $-O-CO-CH_3$ |
| $-CH_3$ | -H | =O | $-CH_3$ | -H |
| $-NH_2$ | -H | =O | -OH | -H |
| $-CH-(CH_3)_2$ | -H | -H | $-CH_2-OH$ | -H |
| $-CH-(CH_3)_2$ | -H | -H | -CH=O | -H |
| $-CH-(CH_3)_2$ | -H | -H | -COOH | -H |
| $-CH-(CH_3)_2$ | -H | -H | $-O-CO-CH_3$ | -H |
| -H | -H | -H | $-CH_2-OH$ | -H |
| -H | -H | -H | -CHO | -H |
| -H | -H | -H | -COOH | -H |
| -H | -H | -H | $-CH_2-O-CO-CH_3$ | -H |
| -H | -H | -H | $-CH_2-O-CO-CH_2-CH_3$ | -H |
| -H | -H | -H | $-CH_2-O-CO-(CH_2)_2-CH_3$ | -H |
| -H | -H | -H | $-CH_2-O-CO-(CH_2)_3-CH_3$ | -H |
| -H | -H | -H | $-CH_2-O-CO-(CH_2)_4-CH_3$ | -H |
| -H | -H | -H | $-CH_2-O-CO-(CH_2)_5-CH_3$ | -H |
| -H | -H | -H | $-CH_2-O-CO-(CH_2)_6-CH_3$ | -H |
| -H | -H | -H | $-CH_2-O-CO-(CH_2)_7-CH_3$ | -H |
| -H | -H | -H | $-CH_2-O-CO-(CH_2)_8-CH_3$ | -H |
| -H | -H | -H | $-CH_2-O-CO-(CH_2)_9-CH_3$ | -H |
| -H | -H | -H | $-CH_2-O-CO-(CH_2)_{10}-CH_3$ | -H |
| -H | -H | -H | $-CH_2-O-CO-(CH_2)_{11}-CH_3$ | -H |
| -H | -H | -H | $-CH_2-O-CO-(CH_2)_{12}-CH_3$ | -H |
| -H | -H | -H | $-CH_2-O-CO-(CH_2)_{13}-CH_3$ | -H |
| -H | -H | -H | $-CH_2-O-CO-(CH_2)_{14}-CH_3$ | -H |
| -H | -H | -H | $-CH_2-O-CO-(CH_2)_{15}-CH_3$ | -H |
| -H | -H | -H | $-CH_2-O-CO-(CH_2)_{16}-CH_3$ | -H |

(continued)

| $R_1$ | $R_2$ | $R_3$ | $R_4$ | $R_5$ |
|---|---|---|---|---|
| -H | -H | -H | $-CH_2-O-CO-(CH_2)_{17}-CH_3$ | -H |
| -H | -H | -H | $-CH_2-O-CO-(CH_2)_{18}-CH_3$ | -H |
| -H | -H | -H | $-CH_2-O-CO-(CH_2)_7-CH=CH-(CH_2)_7-CH_3$ | -H |
| -H | -H | -H | $-CH_2-O-CO-(CH_2)_7-CH=CH-CH_2-CH=CH-(CH_2)_4-CH_3$ | -H |
| -H | -H | -H | $-CH_2-O-CO-(CH_2)_7-CH=CH-CH_2-CH=CH-CH_2-CH=CH-CH_2-CH_3$ | -H |
| -H | -OH | -H | -OH | -H |
| -H | -OH | =O | 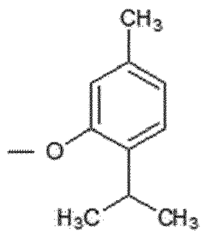 | -H |
| -H | -OH | =O | 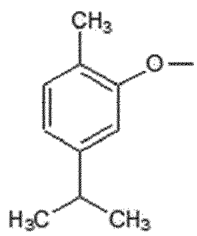 | -H |
| -H | -OH | =O | 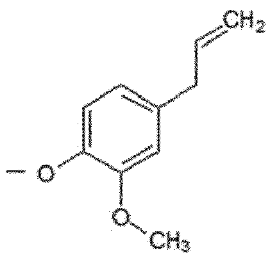 | -H |
| -H | -OH | =O | 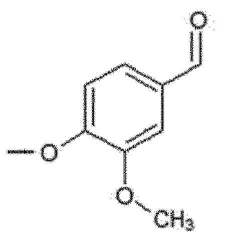 | -H |

Another embodiment of the present invention, the biopesticide composition further comprising at least one pure compound. The pure compound is selected from a group comprising borneol, bornyl acetate, carvone, Y-cadinene, camphene, caryophyllene, citronellal, citronellol, coumarin, 4-methyl-coumarin, dihydromyrcenol, decanal, dihydrocarvone, epoxycarvone, epoxygeranial, farnesol, farnesal, felandrene, fenchone, geranial- citral A-, citronellic acid, geraniol, geranic acid, geranyl acetate, germacrene, 1,4 cineol, 2-heptanone, isocitronellene, D-limonene, linalol, longifolene, menthol, menthyl acetate, ρ-menthane-3,8-diol, p-mentha-1(7),8-diene, methyl, myrcene, neral-citral B-, nerol, nerolidol, neryl acetate, α- ocimene, octanal, 1- octanol, α- pinene, β-pinene, terpinene, terpineol, terpinolene and 3-trans-5-cis-pseudoionone.

Another embodiment of the present invention, the biopesticide composition further comprising at least one

essential oil and/or isomeric mixtures that is selected from a group comprising *Cinnamomun* sp., *Citrus* sp., *Cuminum* sp., *Cymbopogon* sp., *Eucalyptus* sp., *Geranium* sp., *Mentha* sp., *Origanum* sp., *Pelargonium* sp., *Pinus* sp., *Rosmarinus* sp., *Satureja* sp., *Salvia* sp. *and Thymus* sp.

Another embodiment of the present invention, the biopesticide composition further comprising at least one inert ingredient that is selected from surfactants, emulsifiers, wetting additives, solvents, adjuvants, and stabilizers.

The present invention is additionally claimed a method for controlling and treating broad spectrum of pests, as arthropods in all its life cycle, and diseases caused by fungi in plants.

In further embodiments, the pest is caused by at least one of the following species selected from group of insects comprising *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Bemisia argentifolii, Bemisia tabaci, Brevicoryne brassicae, Cydia pomonella, Cydia molesta, Cydia splendana, Diuraphis noxia, Dysaphis devecta, Dysaphis plantaginea, Eriosoma lanigerum, Frankliniella bispinosa, Frankliniella gossvpiana, Frankliniella occidentalis, Frankliniella parvula, Frankliniella schultzei, Frankliniella tenuicornis, Frankliniella tritici, Frankliniella vaccinii, Frankliniella williamsi, Helicoverpa armigera, Hyalopterus pruni, Leptinotarsa behrensi, Leptinotarsa collinsi, Leptinotarsa decemlineata, Leptinotarsa defecta, Leptinotarsa haldemani, Leptinotarsa heydeni, Leptinotarsa juncta, Leptinotarsa lineolata, Leptinotarsa peninsularis, Leptinotarsa rubiginosa, Leptinotarsa texana, Leptinotarsa tlascalana, Leptinotarsa tumamoca, Leptinotarsa typographica, Liriomyza brassicae, Liriomyza huidobrensis, Liriomyza trifolii, Lipaphis erysimi, Macrosiphum avenae, Macrosiphum euphorbiae, Macrosiphum rosae, Myzus cerasi, Myzus nicotianae, Myzus persicae, Nasonovia ribisnigri, Planococcus citri, Pemphigus bursarius, Phorodon humuli, Phylloxera vitifoliae, Pseudococcus comstocki, Pseudococcus cyptus, Pseudococcus longispinus, Pseudococcus saccharicoia, Pseudococcus viburni, Rhopalosiphum insertum, Rhopalosiphum maidis, Rhopalosiphum padi, Schizaphis graminum, Sitobion avenae, Spodoptera cilium, Spodoptera cosmioides, Spodoptera eridania, Spodoptera frugiperda, Spodoptera litoralis, Spodoptera litura, Spodoptera omithogalli, Trialurodes vaporariorum , Tecia solanivora, Thrips obscuratus, Thrips palmi, Thrips tabaci, Toxoptera aurantii, Toxoptera citricola, and Tuta absoluta.*

In further embodiments, the pest is caused by at least one of the following species selected from group of mites comprising *Tetranychus kanzawai, Tetranychus urticae, Eutetranychus orientalis , Eutetranychus banks and Phyllocoptruta oleivora.*

In further embodiments, the disease is caused by fungal pathogens selected from the group comprising *Botrytis cinerea, Botrytis paeoniae, Botrytis tulipae, Erysiphe necator, Fusarium semitectum, Fusarium moniliforme, Fusarium solani, Fusarium oxysporum, Leveillula taurica, and Uncinula necato.*

Advantage of the present invention is the use of benzyl alcohol as specific solvent for selective extraction of the active principles with enhanced biopesticidal activity from plants is not found in the state of art. If another conventional dissolvent such as ethanol, isopropanol, water or mix thereof, was used in extraction process of the second component consisting of plant extract, biopesticidal activity of the composition decreased significantly.

Other advantage of the present invention as result of biopesticide composition is avoiding and/or minimizing the risk of pest resistance.

Other advantage of the present invention is a decreased number of treatments in the same crop by applying one biopesticide composition efficiency in wide type of pests.

## Brief description of drawings

**Figure 1** shows stirred-tanks reactors for the maceration/recirculation (1) and passive maceration (2)

**Figure 2** shows colloid mill a common emulsification device for drop breakage using intense shearing force, which even allows the size of products to reach micrometer range. where (1) is rotor-stator unit, (2) mix inlet from stirred-tank reactor for the maceration/recirculation, (3) mix recirculation to stirred-tank reactor for the maceration/recirculation, (4) mix outlet to rotatory sieve and (5) mix sampling.

**Figure 3** shows a filter press

**Figure 4** shows plastic net bottles (10 cm height, 5 cm diameter, 100-140 microns mesh)

**Figure 5** shows Cage Bugdorm® view (60x60x60 cm, 140 microns mesh).

**Figure 6** shows Pot of 14 cm diameter.

**Figure 7** shows as **Figure 4** plastic net bottles that contain died *Spodoptera littoralis* larvae.

## Description of embodiments

Unless otherwise defined, all terms of art, notations and other scientific terms or terminology used herein are intended to have the meanings commonly understood by those of skill in the art to which this invention pertains. In some cases, terms with commonly understood meanings are defined herein for clarity and/or for ready reference, and the inclusion of such definitions herein should not necessarily be construed to represent a substantial difference over what is generally understood in the art. Many of the techniques and procedures described or referenced herein are well understood and commonly employed using conventional methodology by those skilled in the art.

The singular form "a", "an", and "the" include plural references unless the context clearly dictates otherwise.

Biopesticide: According to Environment Protection Agency from United States of America (EPA), biopesticides are certain types of pesticides derived from natural materials such as animals, plants, bacteria, and certain minerals. Biopesticides include naturally occurring substances that control pests (biochemical pesticides), microorganisms that control pests (microbial pesticides), and pesticidal substances produced by plants containing added genetic material (plant-incorporated protectants) or PIPs.

Biopesticides fall into three major classes:

1. Biochemical pesticides are naturally occurring substances (or structurally similar synthetic substances) that control pests by non-toxic mechanisms. Conventional pesticides, by contrast, are generally synthetic materials that directly kill or inactivate the pest involving toxic effects on nervous system and digestive system.

2. Microbial pesticides consist of a microorganism (e.g., a bacterium, fungus, virus or protozoan) as the active ingredient. Microbial pesticides can control many kinds of pests, although each separate active ingredient is relatively specific for its target pest[s]. For example, there are fungi that control certain weeds and other fungi that kill specific insects.

3. Plant-Incorporated-Protectants (PIPs) are pesticidal substances that plants produce from genetic material that has been added to the plant. For example, scientists can take the gene for the *Bt* pesticidal protein and introduce the gene into the plant’s own genetic material.

Composition: as used herein "composition" is defined as a combination or blend of active ingredients and another compound, carrier, composition, or element inert (for example: surfactant or wetting).

Effective amount or dose, as used herein, is an amount sufficient to affect desired results. An effective amount can be administered in one or more applications. In terms of treatment, it is considered protection against pests.

"Essential oil", "oil "or "volatile essential oil", as used herein, is any oil derived from any part of a plant, and includes any compound purified or derived from a plant oil, such as a hydrophobic, volatile organic compound that is produced by a plant species. A plant essential oil used in composition as disclosed herein need not be isolated from a plant, for example, it may be chemically synthesized or isolated from a microorganism that produce the compound.

Maximum Residue Levels (MRL) is the maximum concentration of a pesticide residue in or on food or feed of plant and animal origin that is legally tolerated when a plant protection product (PPP) is applied correctly (following good agricultural practice).

Pure compound: a chemical substance that contains only one type of molecule, which is the molecule of a compound.

## Example 1 Extraction process of plant extract and resulting benzyl alcohol thereof

One embodiment of present invention is to obtain industrially plant extract and resulting benzyl alcohol of extraction process as follows: first, vegetable matrix (almond hulls mesocarp) is pre-treated for extraction. The main process comprising the following steps:

a) Drying and milling; the vegetable material is drying at room temperature in shadow, milling using a hammer mill up to 500 microns (micronization) and storing at 10-15 °C in shadow until step b). The previous almond hull treated in order to extract secondary metabolites is dissolved in benzyl alcohol. At the same way, benzyl alcohol (2,000 litters) is conditioned **(Figure 1)** inside the stirred tank (1). This agitation tank, with a useful volume of 3,000 litters, is equipped with an anchor stirrer with scrapers driven by a drive motor that allows a rotation speed control between 25 and 90 rpm and has a double jacket with a heat transfer fluid at a programmed temperature to maintain a temperature control of the product introduced into the tank. The solvent is introduced through a plate exchanger

that preheats it to 40°C and this temperature is maintained in the tank by the double jacket, A temperature control is always maintained by monitoring the mixture with a PT 100 temperature sensor. The solvent is kept under stirring for 8-10 minutes to perfect fit of the extraction temperature. After pre-treatment a weight of 1,000 kg of dried and micronized almond hulls (500 microns) is subsequently added to the agitated tank (1) shown in the **Figure 1,** through an endless screw in a 2: 1 v/w ratio (benzyl alcohol: almond hulls). The loading time of the pre-treated almond hulls is about 30 minutes. At this point, by the action of the anchor agitator, almond hulls is kept in suspension preventing its decantation and mixed with benzyl alcohol, giving rise to an imbibition step (penetration of benzyl alcohol into the free spaces present in the particles of almond hulls generating the first dissolution processes of the specific components soluble in benzyl alcohol), starting the extraction process by which, the almond hulls components begin to migrate from the plant's biomass to benzyl alcohol. As a result, the almond hulls are softened, optimizing the subsequent wet grinding process.

b) At this moment, it is carried on the extraction process by solid-liquid extraction technique such as maceration under recirculation conditions. Benzyl alcohol and almond hulls are kept under agitation with the anchor agitator with a rotation speed of 75 rpm to keep all solids in suspension, which prevents jams in the process of recirculation through the tubes when circulates to wet grinding. Supporting the extraction process, the solvent/almond hulls mixture is kept in continuous recirculation on the same tank (1) shown in the **Figure 1** through a colloid mill unit **(Figure 2)** equipped with three serrated crowns of hardened steel that rotate at a constant speed of 3000 rpm working on a rotor-stator principle (1), for 2.5 hours and temperature range (40-60°C). The last parameter is controlled and regulated by a double-jacket in the stirred tank (1) showed in the **Figure 1.** During this time, a sample is taken every hour to verify the dynamic of the extraction process **Figure 2** (5). In this step of the process, colloidal mill allows to break down the vegetal matrix to cellular level, specifically structures that contain the active components, which boost the penetration of benzyl alcohol. As a consequence, active ingredients solubilize more rapidly and better distribution in the solvent preventing saturation zones. The mix (almond hulls mesocarp mix with solvent) pass through the narrow gap (0.1-3.0 mm) between rotor and stator, breakage occurs due to intense shearing force, high frequency vibration, and vortex.

c) The third step is separation of solid material using a filter press **(Figure 3)** the resulting liquid is pumped to an external appropriate container for storing it.

## Example 2. Biopesticide composition obtained procedure

One embodiment of the biopesticide composition, the obtained product in the example 1 is mixed in a reactor that operates in discontinuous mode. Considering the characteristics of the reactor, the final formulation is carried out carefully following the order of addiction of the components and the rotational speed parameters of each agitator and the temperature of the product set out in **Table 2.**

**Table 2. Formulation of biopesticide composition**

| Ingredient | Stirrer/ rpm | Vacuum inside tank | % (w/v) | Order | Time (min) | Product temperature |
|---|---|---|---|---|---|---|
| Product example 1 | Cowles/ 800 | 760 mbar | 32.47% | 1 | - | 25°C |
| XIAMETEX® OFX-5211 Fluid | Cowles/ 800 | 760 mbar | 12.89% | 2 | 10 | 25°C |
| Modarez ®SW-452 | Cowles/ 800 | 760 mbar | 12.89% | 2 | 10 | 25°C |
| ATLAS G-5002L | Cowles/ 1000 | 760 mbar | 6.96% | 3 | 15 | 30°C |
| Break Thru | Cowles/ 1000 | 760 mbar | 6.44% | 4 | 15 | 30°C |
| Citral | Cowles/ 800 | 760 mbar | 15.46% | 5 | 15 | 30°C |
| Methyl cinnamate | Cowles/ 800 | 760 mbar | 12.89% | 6 | 30 | 35°C |

**Example 3. Biopesticidal activity of product obtained in example 1.**

The present example demonstrates biopesticidal activity of main compound in the biopesticide composition obtained such as the process described in the example 1. Which is compared to individual solvent, using different solvents in order to extract active principles from vegetable matrix in the step b) claimed process and a third option that is evaporated the resulting solvent in the extraction process. Vegetable matrix is *Carum carvi* seed. Three kinds of treatments previously mentioned are:

- Treatment A: Individual solvent
- Treatment B: Plant extract without solvent. The solvent was removed by vacuum concentration and the composition was prepared using the crude extract in an aqueous solution in 2% Tween$^{Tm}$24.
- Treatment C: Plant extract with different solvents.

The biopesticidal activity of the different treatments is tested *in vitro* against two lepidopteran pests: polyphagous *Spodoptera littoralis* and olyphagous *Tuta absoluta.* Aside from benzyl alcohol, solvents frequently used to formulate chemical products such as ethanol, isopropanol and water are used in the treatments.

**Table 3. *In vitro* trials against chewing lepidopteran pests**

| Treatment | Composition | Contact mortality (%M) | |
|---|---|---|---|
| | | *Spodoptera littoralis* | *Tuta absoluta* |
| **Treatment A** | | | |
| Benzyl alcohol (BnOH) | Benzyl alcohol (99%) | 17.4 ± 6.2 [de] | 29.6 ± 5.7 [d] |
| Ethanol (EtOH) | Ethanol (96%) | 0.0 ± 0.0 [f] | 0.0 ± 0.0 [e] |
| Isopropanol (IPN) | Isopropanol (99%) | 4.2 ± 6.1 [f] | 11.4 ± 7.2 [e] |
| Water | Distilled water | 0.0 ± 0.0 [f] | 0.0 ± 0.0 [e] |
| **Treatment B** | | | |
| *Carum carvi* seeds | Crude (dry) ethanol extract (Formulated withTween$^{Tm}$24) | 44.3 ± 6.6 [c] | 51.3 ± 6.6 [c] |
| *Carum carvi* seeds | Crude (dry) isopropanol extract (Formulated with Tween$^{Tm}$24) | 48.9 ± 8.4 [c] | 47.5 ± 63.9 cd |
| *Carum carvi* seeds | Crude (dry) water extract (Formulated with Tween$^{Tm}$24) | 27.5 ± 11.4 [d] | 33.8 ± 7.5 [d] |
| **Treatment C** | | | |
| *Carum carvi* seed extract (BnOH) | Extraction of *C. carvi* seeds with BnOH without further concentration (90% BnOH) | 82.5 ± 4.5 [a] | 97.4 ± 2.1 [a] |
| Carum carvi seed extract + BnOH | Mix of BnOH (90%) with crude (dry) ethanol extract (10%) | 69.1 ± 8.6 [b] | 73.4 ± 5.5 [b] |
| *Carum carvi* seed extract (EtOH) | Extraction of *C. carvi* seeds with ethanol without further concentration (70% EtOH) | 48.4 ± 9.1 [c] | 39.9 ± 7.7 [d] |
| *Carum carvi* seed extract (ISP) | Extraction of *C. carvi* seeds with isopropanol without further concentration (70% ISP) | 57.8 ± 5.3 [bc] | 50.1 ± 9.3 [c] |
| *Carum carvi* seed extract ($H_2O$) | Extraction of *C. carvi* seeds with water without further concentration (60% water) | 10.7 ± 5.1 [e] | 8.8 ± 8.0 [e] |

*[1]Application dose was fixed as 3 cc/l (0.3%); %M: % of Mortality- Abbott's corrected; Means within the same column followed by the same letter are not significantly different (ANOVA, Kruskal-Wallis, p<0.05).*

The table 3 shows that solvents had no effect on pest, or it is low. In the case treatment B, plant extract using

an alcohol-based solvent have moderate insecticidal activity. Treatment C demonstrates that biopesticidal activity is increased when the solvent used by extraction is mainly benzyl alcohol and it is not removed compare with the others solvent.

**Table 4 *In vitro* trials against sucking pests**

| Treatment | Composition | Contact mortality (%M) | | |
|---|---|---|---|---|
| | | ***Bemisia tabaci*** **(adults)** | ***Myzus persicae*** **(adults)** | ***Frankliniella occidentalis*** **(immature)** |
| **Treatment A** | | | | |
| Benzyl alcohol (BnOH) | Benzyl alcohol (99%) | 49.8 ± 6.2 [cd] | 19.8 ± 6.2 [d] | 12.5 ± 7.8 [d] |
| Ethanol (EtOH) | Ethanol (96%) | 23.5 ± 8.4 [d] | 16.7 ± 9.1 [d] | 0.0 ± 0.0 [e] |
| Isopropanol (IPN) | Isopropanol (99%) | 0.0 ± 0.0 [e] | 0.0 ± 0.0 [e] | 0.0 ± 0.0 [e] |
| Water | Distilled water | 0.0 ± 0.0 [e] | 0.0 ± 0.0 [e] | 0.0 ± 0.0 [e] |
| **Treatment B** | | | | |
| *Carum carvi* seeds | Crude (dry) ethanol extract (Formulated with Tween[Tm]24) | 53.8 ± 6.7 [c] | 60.1 ± 4.8 [b] | 49.7 ± 5.9 [b] |
| *Carum carvi* seeds | Crude(dry) isopropanol extract (Formulated with Tween[Tm]24) | 50.5 ± 8.8 [c] | 49.7 ± 6.2 [c] | 40.1 ± 9.9 [bc] |
| *Carum carvi* seeds | Crude (dry) water extract (Formulated with Tween[Tm]24) | 38.8 ± 7.1 [d] | 40.1 ± 8.9 [c] | 28.9 ± 11.2 [cd] |
| **Treatment C** | | | | |
| *Carum carvi* seed extract (BnOH) | Extraction of *C. carvi* seeds with BnOH without further concentration (90% BnOH) | 100.0 ± 0.0 [a] | 90.1 ± 3.2 [a] | 77.6 ± 4.3 [a] |
| *Carum carvi* seed extract + BnOH | Mix of BnOH (90%) with crude (dry) ethanol extract (10%) | 79.6 ± 7.4 [b] | 60.5 ± 7.9 [b] | 53.5 ± 9.2 [b] |
| *Carum carvi* seed extract (EtOH) | Extraction of *C. carvi* seeds with ethanol without further | 70.2 ± 10.1 [b] | 42.5 ± 8.3 [c] | 38.8 ± 6.9 [c] |
| | concentration (70% EtOH) | | | |
| *Carum carvi* seed extract (ISP) | Extraction of *C. carvi* seeds with isopropanol without further concentration (70% ISP) | 68.9 ± 18.4 [bc] | 39.8 ± 6.9 [c] | 33.1 ± 6.8 [c] |
| *Carum carvi* seed extract (H2O) | Extraction of *C. carvi* seeds with water without further concentration (60% water) | 54.5 ± 6.8 [c] | 35.8 ± 7.7 [c] | 28.3 ± 14.3 [cd] |
| [1]Application dose was fixed as 3 cc/l (0.3%); %M: % of Mortality- Abbott's corrected; Means within the same column followed by the same letter are not significantly different (ANOVA, Kruskal-Wallis, $p<0.05$). | | | | |

Table 4, as Table 3 shows, the most biopesticidal activity of the present invention is caused by the treatment of plant extract and resulting benzyl alcohol obtained by the extraction process. This biopesticidal activity occurred in all life cycle: egg, immature, and adult. The treatments also were tested in mite pest such as Table 5 is shown.

**Table 5. *In vitro* trials against mite pests**

| Treatment | Composition | Contact mortality (%M) *Tetranychus urticae* (adults) |
|---|---|---|
| **Treatment A** | | |
| Benzyl alcohol (BnOH) | Benzyl alcohol (99%) | 33.4 ± 4.1 d |
| Ethanol (EtOH) | Ethanol (96%) | 0.0 ± 0.0 e |
| Isopropanol (IPN) | Isopropanol (99%) | 0.0 ± 0.0 e |
| Water | Distilled water | 0.0 ± 0.0 e |
| **Treatment B** | | |
| *Carum carvi* seeds | Crude (dry) ethanol extract (Formulated with Tween$^{Tm}$24) | 44.9 ± 12.3 cd |
| *Carum carvi* seeds | Crude (dry) isopropanol extract (Formulated with Tween$^{Tm}$24) | 50.1 ± 3.9 c |
| *Carum carvi* seeds | Crude (dry) water extract (Formulated with Tween$^{Tm}$24) | 48.9 ± 7.7 cd |
| **Treatment C** | | |
| *Carum carvi* seed extract (BnOH) | Extraction of *C. carvi* seeds with BnOH without further concentration (90% BnOH) | 84.3 ± 5.5 a |
| *Carum carvi* seed extract + BnOH | Mix of BnOH (90%) with crude (dry) ethanol extract (10%) | 66.4 ± 8.5 b |
| *Carum carvi* seed extract (EtOH) | Extraction of *C. carvi* seeds with ethanol without further concentration (70% EtOH) | 66.8 ± 9.8 b |
| *Carum carvi* seed extract (ISP) | Extraction of *C. carvi* seeds with isopropanol without further concentration (70% ISP) | 70.1 ± 4.3 ab |
| *Carum carvi* seed extract (H2O) | Extraction of *C. carvi* seeds with water without further concentration (60% water) | 35.4 ± 8.4 d |
| [1]Application dose was fixed as 3 cc/l (0.3%); %M: % of Mortality- Abbott's corrected; Means within the same column followed by the same letter are not significantly different (ANOVA, Kruskal-Wallis, $p<0.05$). | | |

**Example 4. Method for controlling and treating pest and fungi applying biopesticide composition.**

The composition and methods set forth in the present invention will be further illustrated in the following, non-limiting examples. The examples are illustrative of various embodiments only and do not limit the claimed invention regarding the compounds, conditions, volume ratios, process parameters and the like recited herein.

**Bioassay type**

Bioassays were newly designed and/or adapted from the scientific literature to demonstrate the biopesticidal activity of present invention. These were developed to differentiate among the different modes and mechanisms of actions:

- **Contact mortality (Leaf Disc Method)**

The objective of this bioassay is to evaluate the effect of test items on the mortality of adult insects and mites in a short/medium-term (0-24 hours) by topical application. Tests were conducted in plastic net bottles. A total of 10 replicates for each treatment (tests items and negative control) were used in each experiment and temporarily replicated 3 times along the week. **(Figure 4)**

Numbers of live and dead adult insects and mites were counted at 24 h post-treatment. Adult insects and mites were considered dead if no movement was apparent after probing with the tip of a fine brush under stereoscopic magnifying glass. Mortality percentage was calculated in treatment and control groups. If the mortality in negative control is above 20% the test was discarded. When control mortality was greater than 5% but less than 20%, the observed **contact mortality (%M)** was corrected using Abbot's formula:

$$\%\ Corrected\ M = \frac{X-Y}{100-Y} * 100$$

where: x= Mortality (%) in the treatment; y= Mortality (%) in the control.

Means of %M were compared using a one-way analysis of variance (ANOVA, p<0.05) and LSD-test as a post hoc test to verify significant differences between single treatments using Statgraphics Centurion XVII software. When nonnormality in the data was detected, an additional Kruskal-Wallis test was conducted, and Box-and-Whisker Plot (Median Notch) was presented.

- **Antifeedant effects**

The concept of antifeedant as a substance that acts on insect behaviour involves **feeding reduction (FR), settling inhibition (SI) and oviposition Inhibition (IO).** In some cases, settling inhibition is considered as indirect repellent effect. The objective of this bioassay is to evaluate the effect of test items on the settling behaviour of target insects and mites. It is based on the preference of target adults for treated and non-treated host plants located in the same entomological cages (in planta assays). The experiments were conducted in bugdorm®-type net cages **(Figure 5).** Four similar host plants (two leaf stage) were transferred to a same pot **(Figure 6).** Two of the plants were sprayed with biopesticide compositions and the others with the control and dried for 30 minutes. Target adults were released at the site that was equidistant from the two plants. A total of 5 cages for each treatment (fourth plant each) and control were used in each experiment and replicated 3 times in different days. Closed and labelled cages were incubated in a "walk-in" type growth chamber at 25 (±2) °C, 60% relative humidity (RH), and a photoperiod of 16 h:8 h light: dark. After 24 hours the number of settled adults in treated and non-treated plants and the number of laid eggs were recorded on the upper- and under-side of each leaf. Number of adults and eggs were counted under a stereomicroscope.

Settling inhibition index (%SI) was calculated according to the following formula:

$$\%SI = \left(1 - \left(\frac{T}{C}\right)\right) * 100$$

where: T= Settling of treated plants; C= Setting of control plants.

Oviposition inhibition index (%IO) was calculated according to the following formula:

$$\%IO = \left(1 - \left(\frac{T}{C}\right)\right) * 100$$

where: T= Eggs laid on treated plants; C= Eggs laid on control plants.

Means of %SI and %IO were analysed for significance by the non-parametric Wilcoxon signed-rank test ($p < 0.05$).

- **Mycelial Growth Inhibition**

Test items were dissolved on dimethyl sulfoxide (DMSO) at 50%, 25% and 12.5% (w/v). Culture media were prepared mixing prior solutions at 1% (v/v) with PDA medium achieving 0.5%, 0.25% and 0.125% final concentrations. Control treatment were 1 % (v/v) of DMSO with PDA medium. Culture media were autoclaved at 120 °C for 21 min and poured in Petri dishes. The inoculation was by placing an agar circle with mycelia in the centre of each Petri dish. Next step, dishes were sealed with parafilm and incubated at 28 °C for 6 days. Colony diameters were measured at sixth day. Five replicates per treatment were performed.

Mycelial growth inhibition was determined by measuring the colony diameter (cm) on treatments taking in consideration the growth in control. Percentage of mycelial growth inhibition (%MGI) was calculated according to the following formula:

$$MGI = \frac{Dt - Ds}{Dt} * 100$$

Dt is the diameter of colonies in control and Ds is the colony diameter in treatment dishes.

**Biopesticide composition for treatment and control**

From the formulation of biopesticide composition in the example 2 (solution 150 mg/ml containing 2% TWEEN-80Tm in water) were prepared several dilutions (1.0%, 0.5%, 0.1% and 0.05% w/v). Besides, another biopesticide composition such as example 2 based on *Citrus sp.* extract was formulated and the same dilutions were prepared.

Final solution of biopesticide compositions were tested along with commercial products at recommended label dose. The commercial products were selected regarding their natural active principles being close in state of art to the present invention.

Regarding to demonstrate the using of the present invention on broad spectrum of insects, it was tested in the following species: *Bemisia tabaci* is one of several species of whitefly that are currently important agricultural pests. The silverleaf whitefly is a species complex containing at least 40 morphologically indistinguishable species.

**Table 6 *In vitro* efficacy against withefly (*Bemisia tabaci*)**

| Treatment | Dose | Contact mortality (%M) | Settling inhibition (%SI) | Oviposition inhibition (%IO) |
|---|---|---|---|---|
| Orange oil | 4 cc/l | 50.9 ± 5.1 (d) | 71.1 ± 13.1* | 76.7 ± 8.2 * |
| Biopesticide composition based on *Prunus dulcis* extract | 4 cc/l | 100.0 ± 0.0 (a) | 80.3 ± 3.5 * | 73.4 ± 2.3 * |
| | 3 cc/l | 100.0 ± 0.0 (a) | 70.3 ± 6.2 * | 69.8 ± 5.3 * |
| | 2 cc/l | 89.0 ± 8.7 (b) | - | - |
| | 1 cc/l | 70.7 ± 11.7 (c) | - | - |
| Biopesticide composition based on *Citrus sp.* extract | 4 cc/l | 100.0 ± 0.0 (a) | 69.1 ± 5.2 * | 70.1 ± 2.2 * |
| | 3 cc/l | 96.1 ± 3.9 (a) | 63.1 ± 4.2 * | 57.8 ± 3.9* |
| | 2 cc/l | 96.6 ± 2.1 (a) | - | - |
| | 1 cc/l | 80.2 ± 6.1 (ab) | - | - |
| %M: % of Mortality- Abbott's corrected; Means within the same column followed by the same letter are not significantly different (ANOVA, Kruskal-Wallis, $p<0.05$). %SI: Settling inhibition index; * $p < 0.05$, Wilcoxon paired test. %IO: Oviposition inhibition index; * $p < 0.05$, Wilcoxon paired test. | | | | |

*Myzus persicae,* known as the green peach aphid, greenfly, or the peach-potato aphid, is a small green aphid belonging to the order *Hemiptera.* It is the most significant aphid pest of peach trees, causing decreased growth, shrivelling of the leaves and the death of various tissues. It also acts as a vector for the transport of plant viruses such as cucumber mosaic virus (CMV), potato virus Y (PVY) and tobacco etch virus (TEV).

**Table 7 In vitro efficacy against aphids *(Myzus persicae)***

| Treatment | Dose | Contact mortality (%M) | Settling inhibition (%SI) |
|---|---|---|---|
| Imidacloprid 20% w/v | 0.75 cc/l | 100.0 ± 0.0 (a) | 60.2 ± 5.7 * |
| Biopesticide composition based on *Prunus dulcis* extract | 4 cc/l | 100.0 ± 0.0 (a) | 61.4 ± 7.9 * |
| | 3 cc/l | 100.0 ± 0.0 (a) | - |
| | 2 cc/l | 97.7 ± 2.3 (a) | - |
| | 1 cc/l | 90.9 ± 4.6 (b) | - |

(continued)

| Treatment | Dose | Contact mortality (%M) | Settling inhibition (%SI) |
|---|---|---|---|
| Biopesticide composition based on *Citrus sp.* extract | 4 cc/l | 92.2 ± 1.6 (ab) | 79.8 ± 3.5 * |
| | 3 cc/l | 85.6 ± 4.2 (b) | - |
| | 2 cc/l | 84.9 ± 12.3 (b) | - |
| %M: % of Mortality- Abbott's corrected; Means within the same column followed by the same letter are not significantly different (ANOVA, Kruskal-Wallis, p<0.05). %SI: Settling inhibition index; * p < 0.05, Wilcoxon paired test. | | | |

*Frankliniella occidentalis* also known the western flower thrips is an invasive pest insect in agriculture. This species of thrips is native to the Southwestern United States but has spread to other continents, including Europe and Australia. It has been documented to feed on over 500 different species of host plants, including a large number of fruit, vegetable, and ornamental crops including *Brassica oleracea.* The western flower thrips is also the major vector of tomato spotted wilt virus (TSWV), a serious plant disease.

**Table 8 *In vitro* efficacy against thrips (*Frankliniella occidentalis*)**

| Treatment | Dose | Contact mortality (%M) | Feeding reduction (%FR) |
|---|---|---|---|
| Spinosad 48% w/v | 0.70 cc/l | 69.5 ± 12.3 (d) | - |
| Biopesticide composition based on Prunus dulcis extract | 4 cc/l | 100.0 ± 0.0 (a) | 70.1 ± 7.2* |
| | 3 cc/l | 100.0 ± 0.0 (a) | - |
| | 2 cc/l | 97.7 ± 2.3 (a) | - |
| | 1 cc/l | 85.9 ± 4.3 (ab) | - |
| Biopesticide composition based on Citrus sp. extract | 4 cc/l | 98.7 ± 1.2 (a) | 66.3 ± 8.2* |
| | 3 cc/l | 81.3 ± 4.2 (b) | - |
| | 2 cc/l | 77.9 ± 8.0 (c) | - |
| %M: % of Mortality- Abbott's corrected; Means within the same column followed by the same letter are not significantly different (ANOVA, Kruskal-Wallis, p<0.05). %FR: Feeding reduction index (expressed as % of silvering); * p < 0.05, Wilcoxon paired test. | | | |

*Spodoptera littoralis,* also referred to as the African cotton leafworm or Egyptian cotton leafworm or Mediterranean brocade, is a species of moth in the family *Noctuidae.* It is a highly polyphagous organism that is a pest of many cultivated plants and crops. As a result, this species was assigned the label of A2 quarantine pest by the EPPO and was cautioned as a highly invasive species in the United States.

**Table 9 *In vitro* efficacy against lepidoptera (*Spodoptera littoralis*)**

| Treatment | Dose | Contact mortality (%M) | Feeding reduction (%FR) |
|---|---|---|---|
| Spinosad 48% w/v | 0.70 cc/l | 56.5 ± 11.2 (d) | 68.1 ± 9.8 * |

(continued)

| Treatment | Dose | Contact mortality (%M) | Feeding reduction (%FR) |
|---|---|---|---|
| Biopesticide composition based on *Prunus dulcis* extract | 4 cc/l | 100.0 ± 0.0 (a) | 75.6 ± 13.9 * |
| | 3 cc/l | 100.0 ± 0.0 (a) | 68.9 ± 13.8 * |
| | 2 cc/l | 96.1± 7.6 (ab) | 61.8 ± 8.6 * |
| | 1 cc/l | 70.0 ± 8.1 (c) | - |
| | 0.5 cc/l | 31.4 ± 14.3 (e) | - |
| Biopesticide composition based on *Citrus sp.* extract | 4 cc/l | 100.0 ± 0.0 (a) | 83.2 ± 10.8 * |
| | 3 cc/l | 90.0 ± 13.3 (b) | 67.7 ± 2.8 * |
| | 2 cc/l | 86.6 ± 9.4 (bc) | 57.5 ± 8.0 * |
| | 1 cc/l | 66.6 ± 10.5 (cd) | 64.2 ± 12.8 * |
| %M: % of Mortality- Abbott's corrected; Means within the same column followed by the same letter are not significantly different (ANOVA, Kruskal-Wallis, p<0.05). %FR: Feeding reduction index (choice assays); * p < 0.05, Wilcoxon paired test | | | |

*Spodoptera littoralis* larvae died after ingestion of treated surface suggesting ingestion mortality and/or neurotoxicity as primary mode of action. **Figure 7.**

**Table 10 *In vitro* efficacy against lepidoptera *(Tuta absoluta)***

| Treatment | Dose | Contact mortality (%M) | Feeding reduction (%FR) |
|---|---|---|---|
| Spinosad 48% w/v | 0.70 cc/l | 73.3 ± 10.1 (c) | - |
| Biopesticide composition based on *Prunus dulcis* extract | 4 cc/l | 100.0 ± 0.0 (a) | 60.0 ± 24.4 * |
| | 3 cc/l | 96.6 ± 0.9 (ab) | 53.8 ± 7.4* |
| | 2 cc/l | 50.0 ± 11.3 (d) | - |
| Biopesticide composition based on *Citrus sp.* extract | 4 cc/l | 100.0 ± 0.0 (a) | 93.3 ± 6.6 * |
| | 3 cc/l | 85.7 ± 8.7 (b) | 89.3 ± 5.2 * |
| | 2 cc/l | 71.4 ± 8.3 (c) | 69.1 ± 9.2 * |
| %M: % of Mortality- Abbott's corrected; Means within the same column followed by the same letter are not significantly different (ANOVA, Kruskal-Wallis, p<0.05). %FR: Feeding reduction index (choice assays); * p < 0.05, Wilcoxon paired test. | | | |

*Planococcus citri,* commonly known as the citrus mealybug, is a species of mealybugs native to Asia. It has been introduced to the rest of the world, including Europe, the Americas, and Oceania, as an agricultural pest. It is associated with citrus mealybug, but it attacks a wide range of crop plants, ornamental plants, and wild flora.

The citrus mealybug can live "on almost any flowering plant". It is considered a *Citrus* sp. pest with a preference for grapefruit, but it has been found on plants from almost 70 families. It is found on fruit, vegetable, and other food crops, including pineapple, sugar-apple, coconut, muskmelon, yam, figs, strawberry, sweet potato, mangoes, bananas, avocado, date palm, common guava, pomegranate, common pear, apple, eggplant, cacao tree, and soybean. It infests ornamental plants, including indoor plants, and it is common in greenhouses.

**Table 11 In vitro efficacy against scales (*Planococcus citri*)**

| Treatment | Dose | Contact mortality (%M) |
|---|---|---|
| Spinosad 48% w/v | 0.70 cc/l | - |

(continued)

| Treatment | Dose | Contact mortality (%M) |
|---|---|---|
| Biopesticide composition based on *Prunus dulcis* extract | 4 cc/l | 93.0 ± 6.9 (a) |
| Biopesticide composition based on *Citrus sp.* extract | 4 cc/l | 86.1 ± 3.9 (a) |

*Tetranychus urticae* Koch (Acari:Tetranychidae) also known as red spider mite or two spotted spider mite (TSSM) is included in the Invasive Species Compendium (ISC) of CABI (https://www.cabi.org/isc/datasheet/53366).TSMM is one of the most economically important pests of fruits, vegetables, and ornamental plants worldwide. It is had been reported to attack more than 1200 species of plant being the most polyphagous in the *Tetranychidae* family. According to Arthropod Resistance Database more than 500 cases of acaricide resistance have been reported for this species comprising more than 90% of spider-mites resistance (https://www.pesticideresistance.org/search.php). It can feed on most vegetables and food crops such as: peppers, tomatoes, potatoes, cucumbers, beans, maize, and strawberries; and ornamental plants such as roses. It lays its eggs on the leaves, causing direct effect to host plants including tiny pale spots or scars on the leaf due to chlorophyll loss, defoliation, necrosis in young leaves.

**Table 12 *In vitro* efficacy against mites (*Tetranychus urticae*)**

| Treatment | Dose | Contact mortality (%M) | Settling inhibition (%SI) | Egg-laying inhibition (%IO) |
|---|---|---|---|---|
| Spinosad 48% w/v | 0.70 cc/l | 13.7 ± 4.8 (c) | 26.1 ± 4.9* | 37.9 ± 3.8* |
| Biopesticide composition based on *Prunus dulcis* extract | 4 cc/l | 100.0 ± 0.0 (a) | 92.1 ± 0.9 (a) | 94.8 ± 2.5 * |
| | 3 cc/l | 100.0 ± 0.0 (a) | - | - |
| | 2 cc/l | 100.0 ± 0.0 (a) | - | - |
| | 1 cc/l | 90.8 ± 5.2 (b) | - | - |
| Biopesticide composition | 4 cc/l | 100.0 ± 0.0 (a) | 85.2 ± 5.8 (b) | 93.7 ± 6.7 * |
| based on *Citrus sp.* | 3 cc/l | 97.8 ± 2.1 (a) | - | - |
| extract | 2 cc/l | 97.7 ± 2.3 (a) | - | - |

*Botrytis cinerea* is a necrotrophic fungus that affects many plant species, although its most notable hosts may be wine grapes. In viticulture, it is commonly known as "*botrytis* bunch rot"; in horticulture, it is usually called "grey mould" or "gray mold". It is economically important on soft fruits such as strawberries and bulb crops.

**Table 13 *In vitro* efficacy against Botrytis (*Botrytis cinerea*)**

| Treatment | Dose | Mycelial Growth Inhibition (%MGI) |
|---|---|---|
| Tebuconazole 25% w/v | 0.1 % | 81.4 ± 8.4 (a) |
| Biopesticide composition based on *Prunus dulcis* extract | 4 cc/l | 78.7 ± 6.1 (b) |
| Biopesticide composition based on *Citrus sp.* extract | 4 cc/l | 84.7 ± 3.6 (a) |

**Field trials based on biopesticide composition.**

The present invention was evaluated in the field. The biopesticide composition in the example 2 was applied for controlling *Bemisia tabaci* in bean crops. The field trial was designed to evaluate different concentration of biopesticide composition (2 and 3 cc/l) against a commercial product applying recommended doses. 60 plants infected 9,000 initial number of insects were treated, 15 plants each treatment, with 2 applications at 7 days, using electric pump at a pressure of 80 psi that guarantees an optimal in the full leaf.

Assessment method was directly count of variable adults on leaves and disc of leaf, and checkpoints were 0, 1, 3, 7 days after first application, 1, 3 and 7 days after second application in adults. The variables tested was population of adults per leaves and the efficacy was calculated using Henderson Tilton formula:

$$\% \, Popultaion = \left(1 - \frac{(n^{o} \, in \, Control \, BT * n^{o} \, in \, Treated \, AT)}{(n^{o} \, in \, Control \, AT * n^{o} \, in \, treated \, BT)}\right) * 100$$

Whereas BT is before treatment and AT is after treatment.

**Table 14. Efficacy (%) in adults of *B. tabaci* on leaf disc**

| TREATMENTS | 1° Application | | | 2° Application | | |
|---|---|---|---|---|---|---|
| | Day 1 | Day 3 | Day 7 | Day 1 | Day 3 | Day 7 |
| Negative control | 0 | 0 | 0 | 0 | 0 | 0 |
| Biopesticide composition (2cc/L) | 65.7 | 54.4 | 65.1 | 74.9 | 87.8 | 0.0 |
| Biopesticide composition (3cc/L) | 71.6 | 51.1 | 56.8 | 92.4 | 85.2 | 55.0 |
| Positive control (Commercial product) | 65.9 | 65.1 | 73.3 | 82.0 | 89.1 | 78.8 |

## Citation list

This list of references cited by the applicant is for the readers convenience only. It does not form part of the European patent document. Even though great care has been taken in compiling the references, errors or omissions cannot be excluded and the EPO disclaims all liability in this regard.

### Patent documents cited in the description


- US 4,376,784. Pesticidal fluorinated esters of the pyrethrin or pyrethroid type. 24 March 1981.
- US 4,308,279. Crystalline, insecticidal pyrethroid. 30 June 1980.
- US 4,985,251. Flowable insecticidal delivery compositions and methods for controlling insect populations in an aquatic environment. 04 November 1994.
- US 4,983,390. Terrestrial delivery compositions and methods for controlling insect and habitat-associated pest populations in terrestrial environments. 04 November 1994.
- US 4,818,534. Insecticidal delivery compositions and methods for controlling a population of insects in an aquatic environment. 04 November 1994.
- US 4,983,389. Herbicidal delivery compositions and methods for controlling plant populations in aquatic and wetland environments. 01 July 1987.
- US 2,423,284. Insecticides. 17 July 1945.
- US 4,948,013. Method and apparatus for dispensing powdered pesticide. 14 April 1989.
- EP 462,347. Insecticidal composition and corresponding procedure, both of which are harmless towards warm-blooded animals. 21 June 1990
- DE 4,421,471. Insecticidal agent based on natural pyrethrum. 20 June 1994.
- WO 99/18802. A pesticidal composition. 09 October 1998.
- US 4,759,930. Insect killing compositions and method of killing insects employing a synergistic mixture of pyrethrum, eucalyptus, rosemary and peppermint. 09 June 1987.
- US 8,623,420. Sweet whey based biopesticide composition. 07 December 2007.


### Non-patent literature cited in the description


- Banji Adaramola and Adebayo Onigbinde. 2017. Influence of extraction technique on the mineral content and antioxidant capacity of edible oil extracted from ginger rhizome. Chemistry International 3(1) 1-7.
- Qing-Wen Zhang, Li-Gen Lin and Wen-Cai Ye. Techniques for extraction and isolation of natural products: a comprehensive review. Zhang et al. Chin Med (2018) 13:20.
- Dieu-Hien Truong , Dinh Hieu Nguyen, Nhat Thuy Anh Ta, Anh Vo Bui, Tuong Ha Do, and Hoang Chinh Nguyen. Evaluation of the use of different solvents for phytochemical constituents, antioxidants, and in vitro anti-inflammatory

activities of Severinia buxifolia. Journal of Food Quality 2019 Article ID 8178294.

- Amita Pandey and Shalini Tripathi. Concept of standardization, extraction and pre-phytochemical screening strategies for herbal drug. Journal of Pharmacognosy and Phytochemistry 2014; 2 (5): 115-119.

## Claims

**1.** A biopesticide composition comprising a plant extract and resulting benzyl alcohol of step b) obtained by a process that comprises the following steps:

a. Drying and milling of vegetable matrix
b. Solid-liquid extraction technique from vegetable matrix using benzyl alcohol as extraction solvent.
c. Separation of solid material.

**2.** Process according to claim 1 wherein step b) is selected from the types of techniques comprising maceration, percolation, Soxhlet, pressurized liquid extraction, microwave-assisted extraction, ultrasound-assisted extraction, and accelerated solvent extraction.

**3.** Process according to claim 2 wherein step b) is preferably maceration.

**4.** Process according to claim 1 wherein step c) is preferably filtration.

**5.** Process according to claim 1 wherein step a) vegetable matrix is selected from the group comprising *Allium sativum, Aesculus hippocastanum, Arctium lappa, Camellia sinensis, Carum carvi, Centella asiatica, Cinnamomum camphora, Cinnamomum cassia, Cinnamomum verum, Citrus sp., Cymbopogon sp., Cynara scolymus, Equinacea purpura, Eucalyptus sp., Foeniculum vulgare, Illicium verum, Juglans regia, Juniperus communis, Lavandula x intermedia, Linum usitatissimum, Melilotus officinalis, Mentha sp., Olea europaea, Origanum vulgare, Persea americana, Petroselinum crispum, Peumus boldus, Pinus sp., Prunus armeniaca, Prunus avium, Prunus cerasus, Prunus dulcis, Salix sp., Salvia officinalis, Satureja montana, Tanacetum vulgare, Thymus vulgaris, Trigonella foenum-graecum, Urtica dioica and Zingiber officinale.*

**6.** Process according to claim 5 wherein step a) vegetable matrix can be employed as powder, essential oil or hydroalcoholic extract

**7.** The biopesticide composition of claim 1, further comprising at least one compound of the formula

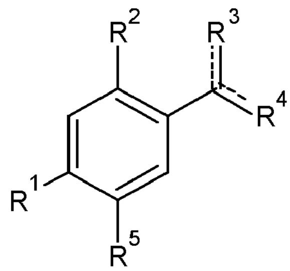

wherein $\mathbf{R_1}$ is any of the following: -H, $-CH_3$, -OH, $-O-CH_3$, $-O-CH_2-CH_3$, $-O-CH_2$-Phenyl, $-O-CO-CH_3$, $-CH-(CH_3)_2$ or $-NH_2$, wherein $\mathbf{R_2}$ is any of the following: -H, -OH, $-O-CO-CH_3$, $-O-CH_2-COOH$ or =O, wherein $\mathbf{R_3}$ is any of the following -H, =O or $-CH_3$, wherein $\mathbf{R_4}$ is $-CH_3$, -OH, $-O-CO-CH_3$, $-O-CO-CH-(CH_3)_2$, $-O-CO-(CH_2)_n-CH_3$, $-O-CO-CH(CH_3)-CH_2-CH_3$, $-O-CO-(CH_2)_7-CH=CH-(CH_2)_7-CH_3$, $-O-CO-(CH_2)_7-CH=CH-CH_2-CH=CH-(CH_2)_4-CH_3$, $-O-CO-(CH_2)_7-CH=CH-CH_2-CH=CH-CH_2-CH=CH-CH_2-CH_3$, =O, =CH-COOH, $=CH-CO-CH_3$, =CH-CO-Phenyl, $=CH-CO-O-CH_2$-Phenyl, =CH-CO-CH=CH-Phenyl, =CH-CO-NH-Glycine, $=CH-CH_2-O-CO-CH_3$, $=CH-CH_2-O-CO-(CH_3)_2$, $=CH-CH_2-O-CO-(CH)_n-CH_3$, $=CH-CH_2-O-CO-CH(CH_3)-CH_2-CH_3$, $-CH-CH_2-O-CO-(CH_2)_7-CH=CH-(CH_2)_7-CH_3$, $=CH-CH_2-O-CO-(CH_2)_7-CH=CH-CH_2-CH=CH-(CH_2)_4-CH_3$, $=CH-CH_2-O-CO-(CH_2)_7-CH=CH-CH_2-CH=CH-CH_2-CH=CH-CH_2-CH_3$, -COOH,-CHO, -CH=O, $-CH_2-OH$, $-CH_2-O-CO-CH_3$, $-CH_2-O-CO-(CH_2)_n-CH_3$, $-CH_2-O-CO-(CH_2)_7-CH=CH-(CH_2)_7-CH_3$, $-CH_2-O-CO-(CH_2)_7-CH=CH-CH_2-CH=CH-(CH_2)_4-CH_3$ , $-CH_2-O-CO-(CH_2)_7-CH=CH-CH_2-CH=CH-CH_2-CH=CH-CH_2-CH_3$, $-CH_2=CH_2$, -CH=CH-Phenyl, $-O-CH_3$, $-O-CH_2-CH_3$, $-O-CH_2$-Phenyl, $-O-CH_2$-CH=CH-Phenyl, -NH-Glycine, -NH-CH=CH-

$CH_2$-Phenyl, -O-**X**, =C-CO-O-**X**, where **X** is thymol, carvacrol, eugenol, vanillin, bornyl or geraniol, $-NH_2$,-NH-$CH_2$-Phenyl, -N-(-$CH_2$-Phenyl$)_2$, -NH-$CH_2$ - COOH, -O-CO-Phenyl, =CH-$CH_2$OH, =CH-CHO, =CH-CH=CH-CO-$CH_3$, =CH-CH=CH-CO-CH=CH-CH=CH-Phenyl, =C($CH_3$)-COOH, =CH-COOH, =CH-COO-$CH_3$, =CH-CO-O-$CH_2$-$CH_3$, =CH-CO-O-$CH_2$-Phenyl, -O-$CH_2$-CH=CH-Phenyl, =CH-CO-$NH_2$, =CH-CO-NH-$CH_2$-Phenyl, =CH-CO-NH-$CH_2$-COOH, =CH-CO-O-CO-CH=CH-Phenyl, =CH-CO-NH-CH=CH-$CH_2$-Phenyl, =CH-CO-CH=CH-vanillin, -CH=$CH_2$, or hybridoma molecules, wherein $\mathbf{R_5}$ is any of the following: -H, -OH, -O, -O-$CH_3$, -O-CO-$CH_3$, -O-$CH_2$-COOH, =O, or -$CH_3$.

**8.** The biopesticide composition of claim 1, further comprising at least one pure compound.

**9.** The biopesticide composition according to claim 8 wherein pure compounds are selected from a group comprising borneol, bornyl acetate, carvone, Y-cadinene, camphene, caryophyllene, citronellal, citronellol, coumarin, 4-methylcoumarin, dihydromyrcenol, decanal, dihydrocarvone, epoxycarvone, epoxygeranial, farnesol, farnesal, felandrene, fenchone, geranial- citral A-, Citronellic acid, geraniol, geranic acid, geranyl acetate, germacrene, 1,4 cineol, 2-heptanone, isocitronellene, D-limonene, linalol, longifolene, menthol, menthyl acetate, ρ-menthane-3,8-diol, p-mentha-1(7),8-diene, methyl, myrcene, neral- citral B-, nerol, nerolidol, neryl acetate, α- ocimene, octanal, 1- octanol, α- pinene, β-pinene, terpinene, terpineol, terpinolene and 3-trans-5-cis-pseudoionone.

**10.** The biopesticide composition according to claim 1 further comprising at least one essential oil.

**11.** The biopesticide composition according to claim 10 wherein essential oil is selected from a group comprising *Cinnamomun sp., Citrus sp., Cuminum sp., Cymbopogon sp., Eucalyptus sp., Geranium sp., Mentha sp., Origanum sp., Pelargonium sp., Pinus sp., Rosmarinus sp., Satureja sp., Salvia sp. and Thymus sp.*

**12.** The biopesticide composition according to claim 1 further comprising at least one Inert Ingredients.

**13.** The biopesticide composition according to claim 12 wherein inert ingredient is selected from surfactants, emulsifiers, wetting additives, solvents, adjuvants, and stabilizers.

**14.** A method for controlling and treating broad spectrum of pests and diseases in plants comprising applying effective amount of the biopesticide composition such as described in previous claims.

**15.** The method according to claim 14 that comprises controlling pest caused by insects.

**16.** The method according to claim 15 that comprises controlling pest caused by insects, said insect is selected from *Acyrthosiphum sp., Aphis sp, Aulacorthum sp., Brachycaudus sp., Bemisia sp., Brevicoryne sp., Cydia sp., Diuraphis sp, Dysaphis sp, Eriosoma sp., Frankliniella sp., Helicoverpa sp., Hyalopterus sp., Leptinotarsa sp., Liriomyza sp., Lipaphis sp., Macrosiphum sp., Myzus sp., Nasonovia sp., Planococcus sp, Pemphigus sp., Phorodon sp., Phylloxera sp., Pseudococcus sp., Rhopalosiphum sp., Schizaphis sp., Sitobion sp., Spodoptera sp., Trialurodes sp, Tecia sp., Thrips sp., Toxoptera sp., and Tuta sp.*

**17.** The method according to claim 16 that comprises controlling pest caused by insects, said insect is selected from *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Bemisia argentifolii, Bemisia tabaci, Brevicoryne brassicae, Cydia pomonella, Cydia molesta, Cydia splendana, Diuraphis noxia, Dysaphis devecta, Dysaphis plantaginea, Eriosoma lanigerum, Frankliniella bispinosa, Frankliniella gossvpiana, Frankliniella occidentalis, Frankliniella parvula, Frankliniella schultzei, Frankliniella tenuicomis, Frankliniella tritici, Frankliniella vaccinii, Frankliniella williamsi, Helicoverpa armigera, Hyalopterus pruni, Leptinotarsa behrensi, Leptinotarsa collinsi, Leptinotarsa decemlineata, Leptinotarsa defecta, Leptinotarsa haldemani, Leptinotarsa heydeni, Leptinotarsa juncta, Leptinotarsa lineolata, Leptinotarsa peninsularis, Leptinotarsa rubiginosa, Leptinotarsa texana, Leptinotarsa tlascalana, Leptinotarsa tumamoca, Leptinotarsa typographica, Liriomyza brassicae, Liriomyza huidobrensis, Liriomyza trifolii, Lipaphis erysimi, Macrosiphum avenae, Macrosiphum euphorbiae, Macrosiphum rosae, Myzus cerasi, Myzus nicotianae, Myzus persicae, Nasonovia ribisnigri, Planococcus citri, Pemphigus bursarius, Phorodon humuli, Phylloxera vitifoliae, Pseudococcus comstocki, Pseudococcus cyptus, Pseudococcus longispinus, Pseudococcus saccharicoia, Pseudococcus viburni, Rhopalosiphum insertum, Rhopalosiphum maidis, Rhopalosiphum padi, Schizaphis graminum, Sitobion avenae, Spodoptera cilium, Spodoptera cosmioides, Spodoptera eridania, Spodoptera frugiperda, Spodoptera litoralis, Spodoptera litura, Spodoptera ornithogalli, Trialurodes vaporariorum , Tecia solanivora, Thrips obscuratus, Thrips palmi, Thrips tabaci, Toxoptera aurantii, Toxoptera citricola, and Tuta absoluta.*

**18.** The method according to claim 14 that comprises controlling pest caused by mites.

**19.** The method according to claim 18 that comprises controlling pest caused by mites said mite is selected from *Tetranychus sp, Eutetranychus sp. and Phyllocoptruta sp.*

**20.** The method according to claim 19 that comprises controlling pest caused by mites said mite is selected from *Tetranychus kanzawai, Tetranychus urticae, Eutetranychus orientalis, Eutetranychus banks* and *Phyllocoptruta oleivora.*

**21.** The method according to claim 14 comprises combating and controlling pests in all life cycle: egg, immature, and adult.

**22.** The method according to claim 14 wherein the disease is caused by *Botrytis* sp., *Erysiphe sp., Fusarium sp, Leveillula sp., and Uncinula sp.*

**23.** The method according to claim 22 wherein the disease is caused by *Botrytis cinerea, Botrytis paeoniae, Botrytis tulipae, Erysiphe necator, Fusarium semitectum, Fusarium moniliforme, Fusarium solani, Fusarium oxysporum, Leveillula taurica, and Uncinula necato*

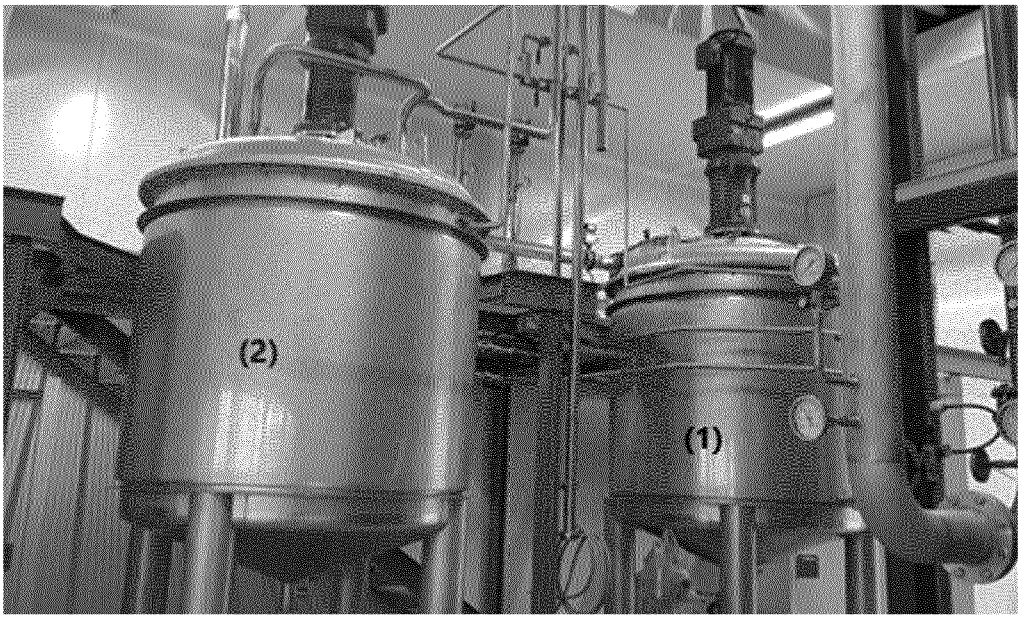


Figure 1

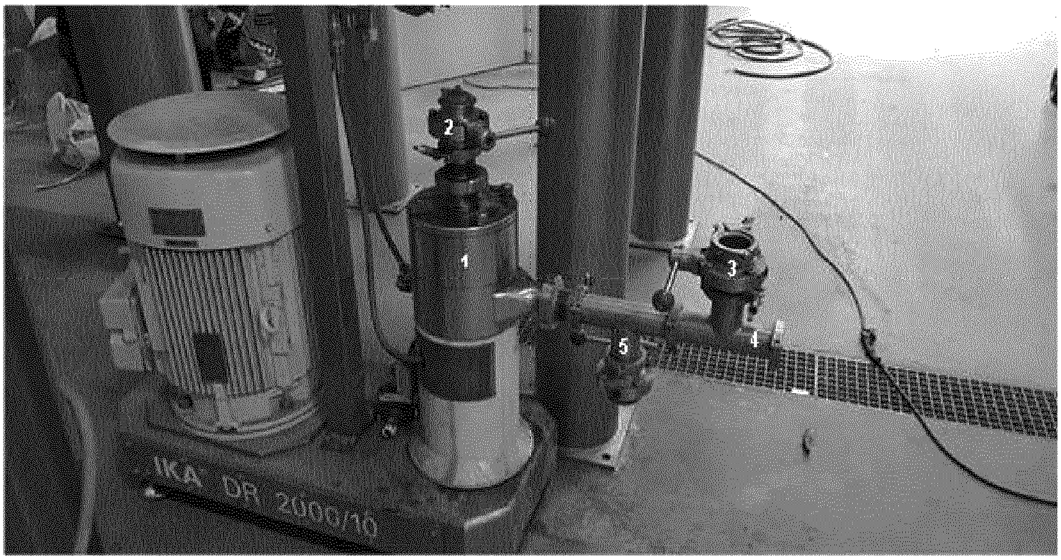


Figure 2

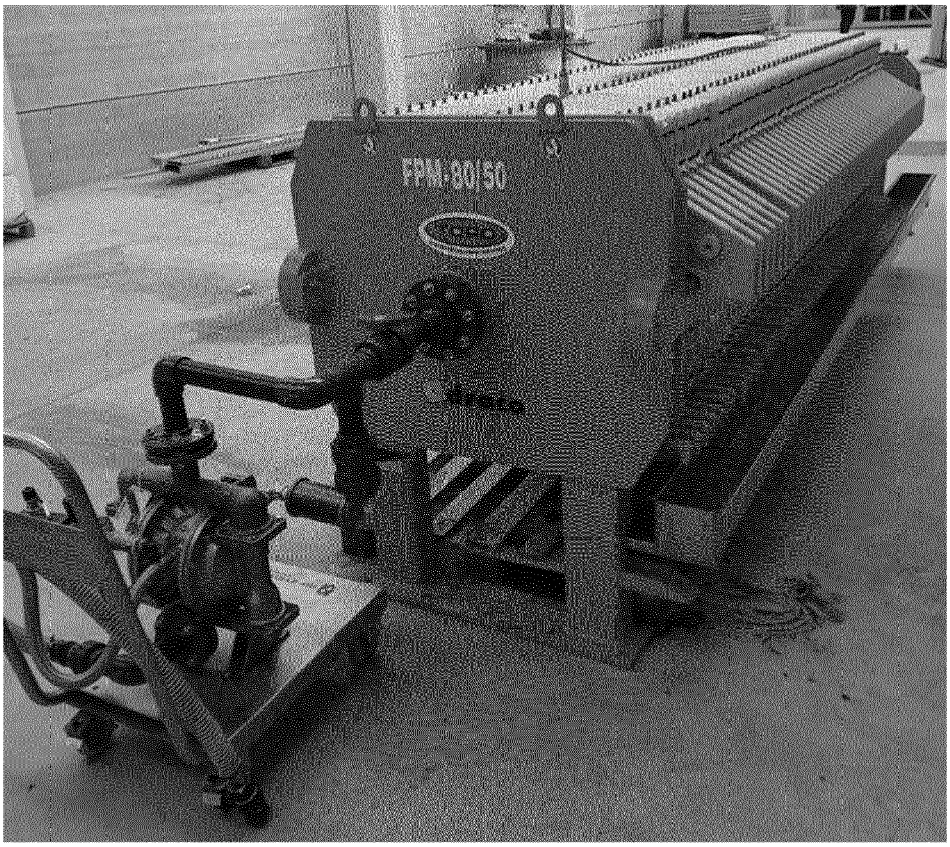


Figure 3

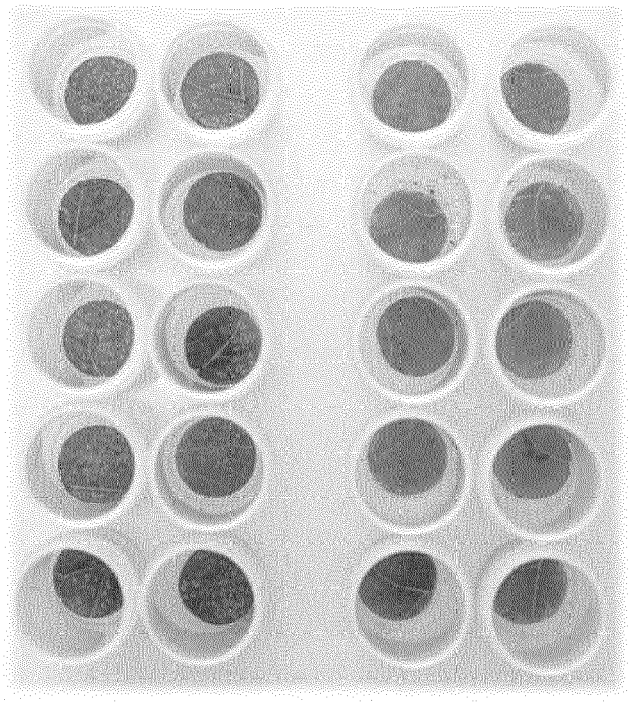

Figure 4

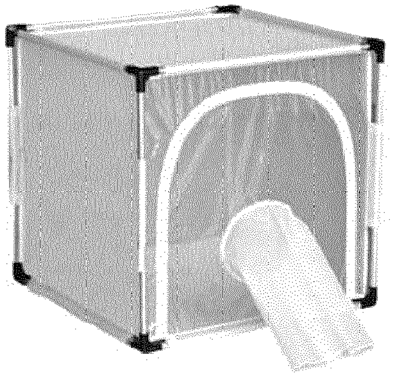

Figure 5

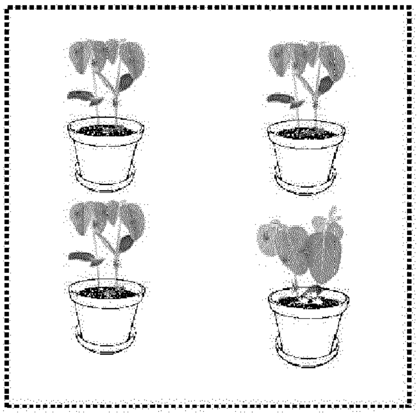

Figure 6

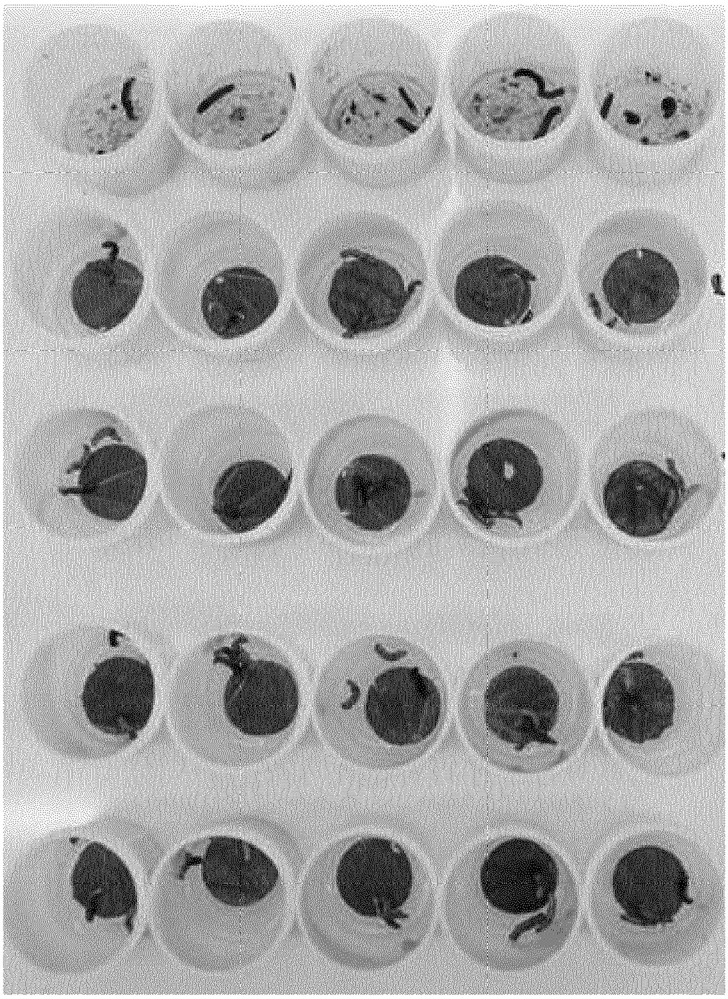

Figure 7

Europäisches Patentamt
European Patent Office
Office européen des brevets

# EUROPEAN SEARCH REPORT

Application Number
EP 22 38 3225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2021/148684 A1 (KIMITEC BIOGROUP S L [ES]) 29 July 2021 (2021-07-29)<br>* the claims; paragraphs 73-77 and example 3 * | 1-23<br>1-23 | INV.<br>A01N31/04<br>A01N65/10<br>A01N65/34<br>A01N65/00<br>A01P7/04 |
| X<br>Y | CN 101 029 276 B (INST OF RESOURCE INSECTS CHINESE ACADEMY OF FORESTRY) 22 December 2010 (2010-12-22)<br>* the background of the invention and examples one and two * | 1-8,10, 12,13<br>1-23 | |
| Y | KARKANIS ANESTIS C ET AL: "Natural insecticides from native plants of the Mediterranean basin and their activity for the control of major insect pests in vegetable crops: shifting from the past to the future", JOURNAL OF PEST SCIENCE, vol. 94, no. 2, 2021, pages 187-202, XP037363454, ISSN: 1612-4758, DOI: 10.1007/S10340-020-01275-X<br>* page 191, left column, second paragraph * | 1-23 | TECHNICAL FIELDS SEARCHED (IPC)<br>A01N |
| | -/-- | | |

The present search report has been drawn up for all claims

| Place of search | Date of completion of the search | Examiner |
|---|---|---|
| Munich | 1 June 2023 | Lorenzo Varela, M |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 38 3225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MESERET C EGIGU ET AL: "Cordeauxia edulis and Rhododendron tomentosum extracts disturb orientation and feeding behavior of Hylobius abietis and Phyllodecta laticollis", ENTOMOLOGIA EXPERIMENTALIS ET APPLICATA, KLUWER ACADEMIC PUBLISHERS, DORDRECHT, NL, vol. 138, no. 2, 24 December 2010 (2010-12-24), pages 162-174, XP071203849, ISSN: 0013-8703, DOI: 10.1111/J.1570-7458.2010.01082.X * page 168, left column, second paragraph; table 2, page 172, left column, last paragraph * ----- | 1-23 | |
| Y | MUHAMMAD AZEEM ET AL: "Chemical composition and antifeedant activity of some aromatic plants against pine weevil (Hylobius abietis)", ANNALS OF APPLIED BIOLOGY, ASSOCIATION OF APPLIED BIOLOGISTS, WELLESBOURNE, GB, vol. 177, no. 1, 27 March 2020 (2020-03-27), pages 121-131, XP071023832, ISSN: 0003-4746, DOI: 10.1111/AAB.12586 * page 129, right column, first paragraph * ----- | 1-23 | TECHNICAL FIELDS SEARCHED (IPC) |
| Y | MATÍAS MENOSSI ET AL: "Essential oil-loaded bio-nanomaterials for sustainable agricultural applications", JOURNAL OF CHEMICAL TECHNOLOGY AND BIOTECHNOLOGY, WILEY, HOBOKEN, USA, vol. 96, no. 8, 13 March 2021 (2021-03-13), pages 2109-2122, XP071530073, ISSN: 0268-2575, DOI: 10.1002/JCTB.6705 * the whole document * ----- -/-- | 1-23 | |

The present search report has been drawn up for all claims

2

| Place of search | Date of completion of the search | Examiner |
|---|---|---|
| Munich | 1 June 2023 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 38 3225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MC KINDLAY K.S. ET AL: "Benzyl alcohol as an aid to penetration of certain ovicides", NATURE, 1 January 1951 (1951-01-01), page 153, XP093048966, | 1-16,21 | |
| Y | * the whole document * | 1-15 | |
| | ----- | | |

TECHNICAL FIELDS SEARCHED (IPC)

The present search report has been drawn up for all claims

2

| Place of search | Date of completion of the search | Examiner |
|---|---|---|
| Munich | 1 June 2023 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 38 3225

This annex lists the patent family members relating to the patent documents cited in the above-mentioned European search report. The members are as contained in the European Patent Office EDP file on
The European Patent Office is in no way liable for these particulars which are merely given for the purpose of information.

01-06-2023

| Patent document cited in search report | Publication date | Patent family member(s) | Publication date |
|---|---|---|---|
| WO 2021148684 A1 | 29-07-2021 | AU 2020424969 A1 | 11-08-2022 |
| | | BR 112022013069 A2 | 06-09-2022 |
| | | ES 2926555 A2 | 26-10-2022 |
| | | JP 2023519648 A | 12-05-2023 |
| | | KR 20220143042 A | 24-10-2022 |
| | | US 2022354128 A1 | 10-11-2022 |
| | | WO 2021148684 A1 | 29-07-2021 |
| CN 101029276 B | 22-12-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4376784 A
- US 4308279 A
- US 4985251 A
- US 4983390 A
- US 4818534 A
- US 4983389 A
- US 2423284 A
- US 4948013 A
- EP 462347 A
- DE 4421471
- WO 9918802 A
- US 4759930 A
- US 8623420 B


### Non-patent literature cited in the description


- **BANJI ADARAMOLA ; ADEBAYO ONIGBINDE.** Influence of extraction technique on the mineral content and antioxidant capacity of edible oil extracted from ginger rhizome. *Chemistry International,* 2017, vol. 3 (1), 1-7
- **QING-WEN ZHANG ; LI-GEN LIN ; WEN-CAI YE ; ZHANG et al.** Techniques for extraction and isolation of natural products: a comprehensive review. *Chin Med,* 2018, vol. 13, 20
- **DIEU-HIEN TRUONG ; DINH HIEU NGUYEN ; NHAT THUY ANH TA ; ANH VO BUI ; TUONG HA DO ; HOANG CHINH NGUYEN.** Evaluation of the use of different solvents for phytochemical constituents, antioxidants, and in vitro anti-inflammatory activities of Severinia buxifolia. *Journal of Food Quality,* 2019
- **AMITA PANDEY ; SHALINI TRIPATHI.** Concept of standardization, extraction and pre-phytochemical screening strategies for herbal drug. *Journal of Pharmacognosy and Phytochemistry,* 2014, vol. 2 (5), 115-119